# FASCICULE DE BREVET EUROPEEN

(11) **EP 1 591 357 B1**
(45) Date de publication et mention de la délivrance du brevet: **01.04.2009**
(21) Numéro de dépôt: 05290747.4
(22) Date de dépôt: 05.04.2005
(51) Int. Cl.: B64C 1/12

(54) **Aménagement intérieur des parois du fuselage d'un aéronef**
Aufbau von Flugzeugrumpfpaneelen
Aircraft fuselage panels interior fitting

(30) Priorité: 27.04.2004 FR 0404435
(43) Date de publication de la demande: 02.11.2005
(73) Titulaire: EADS SOGERMA, 33700 Mérignac (FR)
(72) Inventeur: Schwartz, Bruno, 31880 La Salvetat Saint Gilles (FR); Tanguy, Richard, 31880 La Salvetat Saint Gilles (FR); Quesnel, Jacques, 31470 Saiguede (FR); Munch, Francis, 68440 Habsheim (FR)
(74) Mandataire: Bonnetat, Christian

(56) Documents cités:
- US-A- 4 490 883
- US-A- 5 201 831
- US-A- 6 120 070
- POLLARD J S ET AL ASSOCIATION AERONAUTIQUE ET ASTRONAUTIQUE DE FRANCE: "CABIN NOISE REDUCTION - USE OF ISOLATED INNER CABINS" PROCEEDINGS OF THE EUROPEAN ROTORCRAFT AND POWERED LIFT AIRCRAFT FORUM BUCKEBURG, SEPT. 20 - 22, 1976, KOLN, DGLR, DE, vol. VOL. 2 FORUM 2, 20 septembre 1976 (1976-09-20), pages 190-1910, XP000222068

## Description

L'invention concerne un aménagement intérieur des parois du fuselage délimitant la cabine des passagers d'un aéronef et, plus particulièrement, un aménagement intérieur luxueux de la cabine.

On sait que l'aménagement intérieur de la cabine des passagers d'un aéronef est tributaire de certaines installations techniques nécessaires au bon fonctionnement de l'aéronef et au confort des passagers et parcourant son fuselage. Aussi, pour ménager un espace cabine suffisant, ces installations sont rapportées le long des parois du fuselage et, notamment, en partie haute. Généralement, deux canaux structuraux longitudinaux et parallèlement espacés sont supportés par des fixations en partie haute des parois du fuselage, respectivement de part et d'autre du plan longitudinal de symétrie du fuselage. Dans ces canaux sont reçues les servitudes concernées, c'est-à-dire les installations relatives notamment à la ventilation, à l'éclairage, à l'équipement audio-vidéo, à l'oxygène, etc ...

Pour recouvrir ces servitudes et autres circuits et les parois du fuselage, on prévoit un aménagement intérieur qui comprend généralement :
- un élément central longitudinal formant un dôme reliant fixement les deux canaux structuraux parallèles ;
- un panneau de plafond central inférieur situé sous le dôme de façon espacée à celui-ci, et tourné vers la cabine ; et
- deux ensembles de recouvrement latéraux, chacun s'étendant du canal structural correspondant jusqu'au côté latéral des parois du fuselage et étant fixé audit canal et audit fuselage.

Chaque ensemble se compose alors de trois parties. Une première partie sous la forme d'un panneau latéral courbé partant du côté latéral du fuselage jusqu'au canal structural et fixé aux parois du fuselage et rapporté au bord longitudinal correspondant du canal concerné ; une deuxième partie sous la forme d'un panneau plat rapporté fixement sous le canal structural pour l'obturer et servant lui-même de support aux servitudes ; et une troisième partie sous la forme d'une baguette de bordure fixée à l'autre bord longitudinal dudit canal concerné et cachant les fixations et la liaison entre les bords longitudinaux du panneau de plafond et le canal structural.

Bien qu'ils soient largement utilisés, ces aménagements présentent certains inconvénients.

Du fait des nombreuses liaisons par vissage ou autre et pièces en présence constituant l'aménagement, les séquences de démontage et de remontage pour effectuer la maintenance ou changer des éléments des servitudes sont complexes, longues et fastidieuses. Par exemple, pour accéder aux servitudes dans l'un des canaux structuraux, il est nécessaire de démonter au moins les deuxième et troisième parties (si ce n'est les trois dans certains cas) de l'ensemble de recouvrement concerné, puisque la deuxième partie fait également office de paroi du canal structural. De même, pour accéder au dôme, qui est fixé sur lesdits canaux, et intervenir sur les circuits et autres situés dans l'espace entre le dôme, le canal structural correspondant et les parois du fuselage concernées, il est nécessaire de déposer les baguettes de bordure et le panneau de plafond en question, puis de retirer les fixations du dôme pour ensuite le sortir entre les deux canaux selon une cinématique délicate puisqu'il est fixé sur ces derniers (le soulever, puis l'incliner pour son passage entre les canaux) et à risque.

On comprend donc que le nombre excessif de pièces (notamment chaque ensemble de recouvrement) et leur agencement (liaison des ensembles avec les canaux, dôme par dessus les canaux, ...) contribuent à la complexité de l'aménagement et à la lourdeur de celui-ci.

De plus, esthétiquement, la présence visuelle de rainures longitudinales entre les parties des ensembles est disgracieuse, ce qui est dommageable concernant un aménagement spécifique luxueux des cabines pour des passagers privilégiés (VIP). En outre, l'espace disponible en partie haute de la cabine ne peut être augmenté du fait des réalisations figées entre les ensembles et les canaux structuraux.

La présente invention a pour but de remédier à ces inconvénients et concerne un aménagement intérieur des parois du fuselage d'un aéronef, dont la conception permet notamment :
- de réduire son poids ;
- de faciliter les opérations de maintenance en réduisant les temps d'intervention ;
- d'améliorer l'aspect esthétique ;
- d'optimiser l'espace utile en cabine ; et
- de diminuer le niveau sonore en cabine.

A cet effet, selon l'invention, le fuselage d'aéronef comportant des parois délimitant la cabine des passagers et supportant, en partie haute dudit fuselage et respectivement de part et d'autre de son plan longitudinal de symétrie, deux canaux structuraux longitudinaux et parallèlement espacés dans lesquels passent des servitudes de l'aéronef, et un aménagement intérieur, est remarquable en ce que l'aménagement intérieur comporte :
- un élément central longitudinal formant dôme, reliant lesdits canaux structuraux;
- un panneau de plafond inférieur situé sous ledit dôme et tourné vers ladite cabine ; et
- deux panneaux latéraux de recouvrement, disposés de façon que :
   . le bord inférieur de chaque panneau latéral est articulé par rapport audit fuselage, autour d'une liaison à axe longitudinal, chaque panneau pouvant ainsi occuper une position haute pour laquelle il est lié au canal structural correspondant au voisinage de son bord supérieur et une position basse pour laquelle il est éloigné dudit canal structural ; et
   . le bord supérieur de chaque panneau latéral se prolonge, dans la position haute, au-delà dudit canal structural correspondant pour recouvrir les bords longitudinaux correspondants desdits dôme et panneau de plafond.

Ainsi, grâce à l'invention, en réalisant chaque ensemble de recouvrement de l'aménagement en un panneau latéral pivotant d'un seul tenant, on permet de dissocier celui-ci du canal structural correspondant, de sorte que l'on peut intervenir sur les servitudes dans ledit canal sans démonter le panneau, ce qui facilite les opérations de maintenance et d'inspection sur ledit canal, sur la paroi intérieure du fuselage et sur les équipements et câblages d'aéronavigation qui y sont attachés. Cela est obtenu grâce au caractère pivotant de chaque panneau qu'il convient simplement de faire passer de la position haute à la position basse pour découvrir le canal structural et accéder aux servitudes, fixations ou autres dissimulées par l'aménagement. Par ailleurs, les coûts de fabrication s'en trouvent forcément réduits et le gain de masse est significatif en partie du fait de la suppression des fixations des trois parties constituant l'ensemble selon l'art antérieur, sur les parois du fuselage et le canal structural. La réalisation du panneau latéral d'un seul tenant, en suivant de plus harmonieusement le profil du fuselage et du canal, et le prolongement de son bord supérieur pour cacher les bords et fixations du panneau de plafond et éviter les rainures disgracieuses, contribuent de plus à améliorer l'aspect esthétique de la cabine en donnant l'apparence d'un grand volume.

On obtient ainsi un aménagement structural, fonctionnel et esthétique notable de la cabine des passagers d'un aéronef, aménagement particulièrement appréciable pour les cabines de VIP.

On remarquera que le document US-A-6 120 070 qui écrit un dispositif de verrouillage entre, d'une part, un panneau de plafond revêtant la partie supérieure d'une cabine d'aéronef et, d'autre part, un panneau de revêtement latéral de ladite cabine, articulé à sa partie inférieure et recouvrant des servitudes, est considéré comme l'art antérieur le plus proche.

De plus, dans l'aménagement intérieur de l'invention, des ouvertures sont ménagées dans la partie de chaque panneau latéral en regard dudit canal structural correspondant de façon à permettre l'utilisation et le fonctionnement des servitudes installées dans ce dernier.

Par exemple, chaque panneau latéral est lié, dans sa position haute, à son canal structural correspondant par des moyens de fixation à verrouillage/déverrouillage rapide. Ainsi, la liaison "panneau latéral - canal structural" est facile et rapide.

Avantageusement, l'aménagement comporte, le long de chaque côté latéral dudit fuselage, un profilé de support fixé longitudinalement audit côté latéral du fuselage et le long duquel est monté pivotant ledit panneau latéral de l'ensemble monobloc autour de ladite liaison à axe longitudinal.

De préférence, ladite liaison à axe longitudinal est alors définie par une charnière dont une paumelle est fixée au bord inférieur dudit panneau latéral et dont l'autre est fixée audit profilé. On remarque ainsi la simplicité de réalisation de la liaison à axe longitudinal.

De façon analogue à ce qui est montré par le document US-A-5 201 831, l'aménagement de la présente invention peut comporter un panneau externe d'habillage, qui est rapporté sur chaque ensemble de recouvrement en étant espacé de celui-ci. Dans ce cas, chaque panneau externe recouvre, en partie basse, ladite liaison à axe longitudinal et s'étend, en partie haute, jusqu'à proximité dudit canal structural correspondant. Chaque panneau externe est lié audit panneau latéral, de préférence par des moyens de fixation à verrouillage/déverrouillage rapide.

Par ailleurs, pour faciliter leur démontage et leur remontage, ledit dôme est rapporté par en dessous, depuis ladite cabine passagers, contre lesdits canaux structuraux parallèles et est fixé à ceux-ci, et ledit panneau de plafond inférieur est également rapporté par en dessous, depuis ladite cabine, contre ledit dôme et est fixé à celui-ci et auxdits canaux structuraux.

Avantageusement, pour réduire les nuisances sonores et diminuer le niveau sonore en cabine, lesdits canaux structuraux et lesdits profilés sont fixés aux parois dudit fuselage par l'intermédiaire d'éléments amortisseurs.

Les figures du dessin annexé feront bien comprendre comment l'invention peut être réalisée. Sur ces figures, des références identiques désignent des éléments semblables.

La figure 1 est une section transversale partielle et schématique d'un fuselage d'un aéronef équipé de l'aménagement selon l'invention.

Les figures 2 et 3 montrent, de façon agrandie, la liaison de l'un des panneaux latéraux monoblocs respectivement, en partie basse, au fuselage de l'aéronef et, en partie haute, au canal structural correspondant.

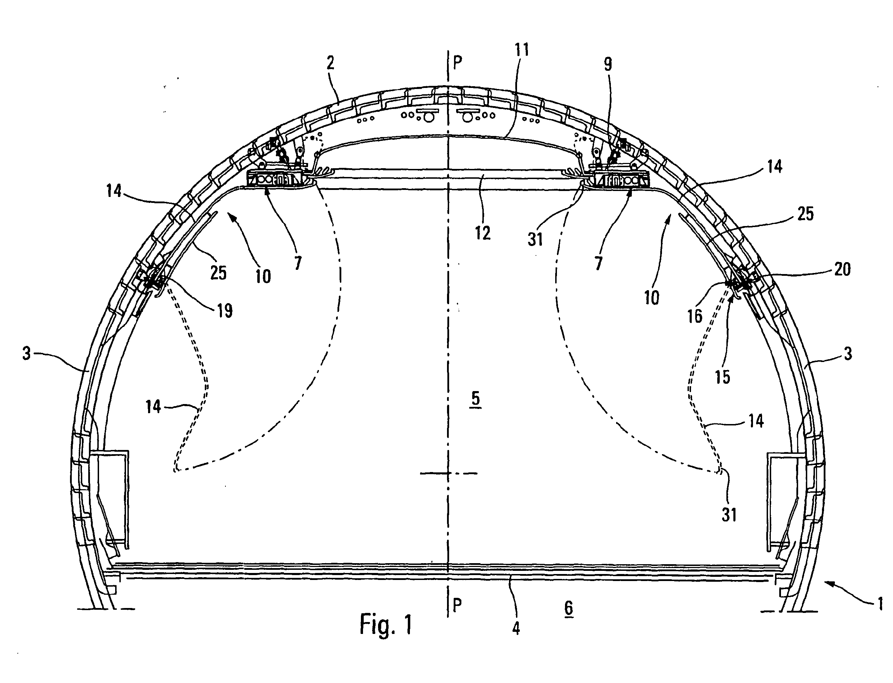

Le fuselage 1 d'un aéronef, représenté sur la figure 1, comporte usuellement des parois de structure assemblées 2 schématiquement illustrées et incorporant des hublots latéraux 3, et un plancher 4 séparant l'intérieur du fuselage en un compartiment supérieur 5 pour les passagers et membres d'équipage, désigné par la suite "cabine passagers", et en un compartiment inférieur 6 pour le fret notamment.

De façon connue, dans l'espace délimité par la cabine passagers 5, sont prévus deux canaux structuraux 7 courant parallèlement le long du fuselage et disposés en partie haute de ce dernier et respectivement de part et d'autre du plan de symétrie longitudinal vertical P dudit fuselage. Dans ces canaux structuraux 7 espacés parallèlement l'un de l'autre passent et sont fixées différentes installations techniques non représentées sur les figures, destinées à la ventilation, à l'éclairage, aux équipements audio-vidéo, à l'oxygène, etc ... Chaque canal 7 est réalisé notamment à partir de pièces métalliques assemblées 8 et présente, en coupe transversale, une forme rectangulaire ouverte vers le bas et des éléments de fixation 9, tels que des bielles de reprise et cornières de fixation, solidarisent de façon ajustable chaque canal structural aux parois 2 du fuselage.

L'aménagement intérieur du fuselage 1 permettant de dissimuler les parois de structure 2, les canaux structuraux 7 et autres comprend :
- deux ensembles de recouvrement 10 s'étendant respectivement le long des deux côtés latéraux des parois 2 du fuselage 1, depuis le haut des hublots 3 jusqu'aux canaux structuraux correspondants 7 ;
- un élément central longitudinal 11 formant un dôme et obturant l'espace entre les deux canaux structuraux 7 ; et
- un panneau de plafond inférieur 12 situé sous le dôme et tourné vers la cabine passagers 5.

Bien évidemment, selon la longueur du fuselage, plusieurs ensembles de recouvrement 10, éléments centraux ou dômes 11 et panneaux de plafond 1 2 sont mis bout à bout, les uns à la suite des autres respectivement.

Plus particulièrement, chaque ensemble de recouvrement 10 est avantageusement monobloc et comprend un panneau latéral 14 d'un seul tenant dont le profil transversal suit sensiblement le côté latéral courbe des parois 2 depuis les hublots 3, puis la base horizontale du canal structural 7. Comme les deux ensembles 10 sont identiques dans ce mode de réalisation en étant disposés symétriquement par rapport au plan longitudinal P, un seul sera décrit.

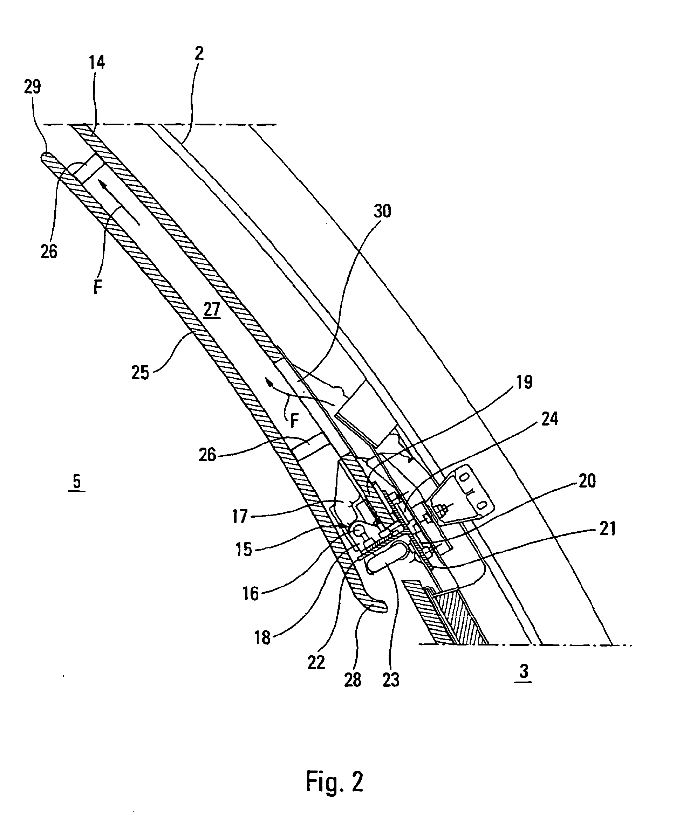

Comme le montrent les figures 1 et 2, chaque panneau latéral 14 est lié à la paroi de structure 2 correspondante par l'intermédiaire d'une liaison par articulation 15 à axe longitudinal 16 (parallèle au plan P et au plancher), autour de laquelle le panneau 14 peut occuper une position haute, représentée sur les figures 1 et 2, et une position basse en traits interrompus sur la figure 1, comme on le verra ultérieurement.

Dans ce mode de réalisation, la liaison par articulation 15 est du type à charnière à deux paumelles 17, 18. Pour cela, l'une de ses paumelles 17 est solidaire du bord inférieur longitudinal 19 du panneau 14, tandis que l'autre paumelle 18 est solidaire d'un profilé 20 s'étendant longitudinalement le long de la paroi latérale 2 du fuselage juste au-dessus des hublots 3. Par exemple, le profilé 20 a une section transversale en T dont le toit 21 est rapporté fixement à la paroi du fuselage, alors que la jambe 22 reçoit, sur son côté latéral supérieur sur la figure 2, la paumelle correspondante 18. On remarque également que le côté latéral inférieur de la jambe 22 du profilé en T 20 porte une rampe d'éclairage 23. De façon à absorber au mieux les vibrations, la fixation du profilé 20 sur le fuselage 1 s'effectue par l'intermédiaire d'éléments amortisseurs 24.

Par ailleurs, sur chaque panneau latéral 14 des ensembles monoblocs 10 est rapporté un panneau externe d'habillage 25 qui est fixé, par des verrous amovibles symbolisés en 26, au panneau latéral correspondant 14. Chaque panneau externe 25 recouvre la partie courbe de ce dernier, c'est-à-dire celle suivant parallèlement le côté latéral du fuselage. Un espace 27 est ménagé, via lesdits verrous, entre le panneau externe 25 et le panneau latéral 14 de chaque ensemble monobloc 10. Le bord inférieur longitudinal 28 de chaque panneau externe 25 parvient jusqu'aux hublots 3 en cachant bien entendu le profilé 20 et la rampe lumineuse 23, tandis que son bord supérieur longitudinal 29 arrive à proximité du niveau du canal structural correspondant 7. Ainsi, à travers des ouvertures 30 ménagées dans chaque panneau latéral 14, de l'air conditionné, issu d'un conduit non représenté longeant les parois 2 du fuselage, peut circuler dans l'espace 27 entre les panneaux 14 et 25 selon les flèches F et se diffuse dans la cabine 5. De même, la rampe d'éclairage 23, qui est cachée par le bord supérieur 28 du panneau externe 25, diffuse latéralement, par l'espace prévu, une lumière indirecte homogène.

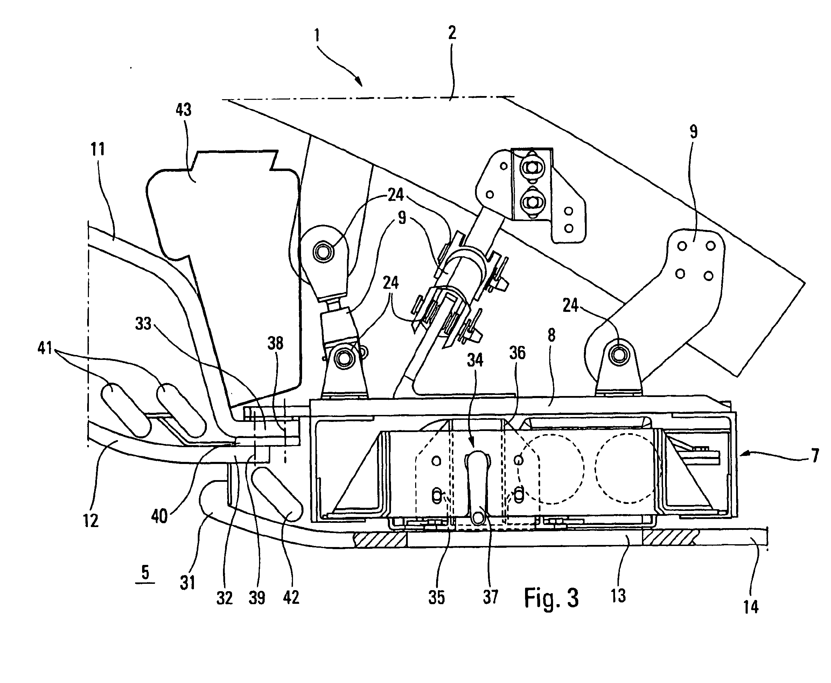

Chaque panneau latéral 14 suit parallèlement la base horizontale du canal structural correspondant 7 et son bord supérieur longitudinal 31 se prolonge, de façon courbée vers le haut, bien au-delà dudit canal pour recouvrir, comme le montrent les figures 1 et 3, les bords longitudinaux correspondants 32, 33 du panneau de plafond inférieur 12 et du dôme 11. Dans la partie horizontale du panneau latéral 14 sont ménagées, au plus juste, des ouvertures 13 permettant, depuis la cabine 5, l'utilisation et le fonctionnement des servitudes fixées dans le canal structural 7.

Sur ces figures, les panneaux latéraux 14 représentés des ensembles monoblocs 10 occupent la position haute usuelle pour laquelle ils sont liés aux canaux structuraux respectifs 7. Pour cela, des moyens de fixation 34 sont prévus pour relier les panneaux 14 aux canaux 7, et ils sont de préférence du type à verrouillage/déverrouillage rapide. Par exemple, des verrous connus du type "Harper" peuvent être utilisés. Ils comprennent chacun une partie 35 fixée au panneau, une partie 36 fixée au canal structural et un levier pivotant 37 accrochant les deux parties entre elles et commandables extérieurement. Ainsi, ces moyens de fixation à verrou 34 sont invisibles depuis la cabine 5 tout en étant commandables depuis celle-ci, par exemple, à partir d'une carte (non représentée) glissée entre deux panneaux latéraux consécutifs ou à partir d'une fente ménagée directement dans le panneau, comme cela peut être le cas pour les panneaux externes 25 liés aux panneaux latéraux monoblocs 14 par les verrous 26.

En ce qui concerne la fixation de l'élément central ou dôme 11 aux deux canaux structuraux 7, ses bords longitudinaux 33 sont rapportés depuis la cabine passagers 5 (c'est-à-dire avantageusement par en dessous) contre des pièces correspondantes 8 des canaux 7, et des vis (ou autre organe de fixation), symbolisées par un trait d'axe 38 sur les figures 1 et 3, solidarisent le dôme aux canaux de façon telle que la dilatation et la déformation du fuselage en vol restent possibles. De façon similaire, les bords longitudinaux 32 du panneau de plafond inférieur 12 sont rapportés contre ceux du dôme 11 et fixés par des vis ou analogues symbolisées par un trait d'axe 39. Avantageusement, une plaque intermédiaire 40 est prise entre les deux bords correspondants 32, 33 du dôme et du panneau de plafond et porte des rampes d'éclairage 41 prévues dans l'espace interne entre le dôme 11 et le panneau de plafond inférieur 12, ouvert dans sa partie centrale.

On voit avantageusement sur les figures 1 et 3, que le bord supérieur 31 de chaque panneau latéral 14 recouvre totalement les bords 33 du dôme 11 et les bords 32 du panneau du plafond 1 2, ainsi que leurs fixations sur la pièce 8 du canal, de sorte qu'ils sont invisibles depuis la cabine passagers 5. Une rampe d'éclairage 42 peut être également prévue dans l'espace délimité entre les bords du panneau latéral, du dôme, du panneau de plafond et du canal.

Une chambre de distribution 43 de l'air conditionné est par ailleurs prévue entre le dôme 11 et la partie haute du fuselage 1.

De la même façon que pour la fixation des profilés 20 aux parois latérales 2 du fuselage, des éléments amortisseurs 24 sont montés au niveau des bielles de reprise et cornières de fixation 9 des canaux structuraux 7 sur le fuselage 2, de façon à absorber les vibrations engendrées selon les trois axes de l'aéronef.

Par un simple déverrouillage des moyens de fixation amovible 34, les panneaux latéraux 14 d'un seul tenant basculent vers leur position abaissée (représentée en trait interrompu sur la figure 1) en pivotant autour de l'axe longitudinal 16 des charnières 15, ce qui libère l'accès en maintenance aux différentes servitudes dans les canaux structuraux et sur le fuselage ainsi qu'aux fixations du dôme et du panneau de plafond inférieur. Comme les fixations de ces derniers sont accessibles depuis la cabine passagers 5, leur démontage, notamment pour intervenir en partie haute du fuselage, et leur remontage sont rendus très faciles. Les opérations de maintenance sont alors moins longues et moins fastidieuses.

Par la réalisation en un seul tenant des panneaux latéraux réduisant le nombre et la valeur des interstices dans l'habillage, on diminue le nombre de pièces et fixations nécessaires préalablement à l'habillage des parois du fuselage, donc la masse et le coût de l'aménagement, on diminue également le niveau sonore en cabine, d'autant plus que des éléments amortisseurs de vibration sont prévus, on optimise les temps de maintenance par la séparation fonctionnelle et structurelle des panneaux d'avec les canaux structuraux, et on améliore l'espace utile en cabine et son aspect esthétique.

De ce qui précède, l'aménagement intérieur atteint les buts énoncés préalablement et est particulièrement adapté à l'agencement d'une cabine pour des passagers VIP.

## Revendications

1. Fuselage d'aéronef comportant des parois délimitant la cabine des passagers (5) et supportant, en partie haute dudit fuselage et respectivement de part et d'autre de son plan longitudinal de symétrie, deux canaux structuraux (7) longitudinaux et parallèlement espacés dans lesquels passent des servitudes de l'aéronef, et un aménagement intérieur :
**caractérisé en ce que** l'aménagement intérieur comporte :
- un élément central longitudinal formant dôme (11), reliant lesdits canaux structuraux ;
- un panneau de plafond inférieur (12) situé sous ledit dôme et tourné vers ladite cabine ; et
- deux panneaux latéraux (14) de recouvrement, disposés de façon que :
le bord inférieur (19) de chaque panneau latéral (14) est articulé par rapport audit fuselage, autour d'une liaison (15) à axe longitudinal, chaque panneau pouvant ainsi occuper une position haute pour laquelle il est lié audit canal structural (7) au voisinage de son bord supérieur (31) et une position basse pour laquelle il est éloigné dudit canal structural ; et
. le bord supérieur (31) de chaque panneau latéral (14) se prolonge, dans la position haute, au-delà dudit canal structural (7) pour recouvrir les bords longitudinaux correspondants desdits dôme (11) et panneau de plafond (12).

2. Fuselage d'aéronef selon la revendication 1,
**caractérisé en ce que** des ouvertures (13) sont ménagées dans la partie de chaque panneau latéral (14) en regard dudit canal structural correspondant (7).

3. Fuselage d'aéronef selon la revendication 1 ou 2,
**caractérisé en ce que** chaque panneau latéral (14) est lié, dans sa position haute, à son canal structural correspondant (7) par des moyens de fixation à verrouillage/déverrouillage rapide (34).

4. Fuselage d'aéronef selon l'une des revendications 1 à 3,
**caractérisé en ce qu'**il comporte, le long de chaque côté latéral dudit fuselage, un profilé de support (20) fixé longitudinalement audit côté latéral du fuselage et le long duquel est monté pivotant ledit panneau latéral (14) de l'ensemble monobloc autour de ladite liaison à axe longitudinal.

5. Fuselage d'aéronef selon la revendication 4,
**caractérisé en ce que** ladite liaison à axe longitudinal est définie par une charnière (15) dont une paumelle (17) est fixée au bord inférieur dudit panneau latéral (14) et dont l'autre (18) est fixée audit profilé (20).

6. Fuselage d'aéronef selon l'une des revendications 1 à 5, du type dans lequel un panneau externe d'habillage (25) est rapporté sur chaque ensemble de recouvrement en étant espacé de celui-ci,
**caractérisé en ce que** chaque panneau externe (25) recouvre, en partie basse, ladite liaison (15) à axe longitudinal et s'étend, en partie haute, jusqu'à proximité dudit canal structural correspondant (7) et **en ce qu'**il est lié audit panneau latéral (14) par des moyens de fixation à verrouillage/déverrouillage rapide (26).

7. Fuselage d'aéronef selon l'une quelconque des revendications 1 à 6,
**caractérisé en ce que** ledit dôme (11) est rapporté par en dessus, depuis ladite cabine passagers (5), contre lesdits canaux structuraux parallèles (7) et est fixé à ceux-ci.

8. Fuselage d'aéronef selon l'une quelconque des revendications 1 à 7,
**caractérisé en ce que** ledit panneau de plafond inférieur (12) est rapporté par en dessous, depuis ladite cabine, contre ledit dôme (11) et est fixé à celui-ci et auxdits canaux structuraux (7).

9. Fuselage d'aéronef selon les revendications 1 et 4,
**caractérisé en ce que** lesdits canaux structuraux (7) et lesdits profilés (20) sont fixés aux parois (2) dudit fuselage par l'intermédiaire d'éléments amortisseurs (24).

## Claims

1. Fuselage of an aircraft comprising walls of the fuselage of an aircraft delimiting the passenger cabin (5) and supporting, at the upper part of said fuselage and, respectively, on each side of its longitudinal plane of symmetry, two longitudinal structural ducts (7) spaced apart parallel to one another and through which the aircraft auxiliaries run, and an internal arrangement, **characterized in that** the internal arrangement comprises :
- a longitudinal central element forming a dome (11) connecting said structural ducts;
- an interior ceiling panel (12) situated under said dome and facing toward said cabin; and
- two lateral cover panels (14) arranged in such a way that:
• the lower edge (19) of each lateral panel (14) is articulated with respect to said fuselage, about a connection (15) with a longitudinal axis, each panel thus being able to occupy a raised position in which it is connected to said structural duct (7) near its upper edge (31) and a lowered position in which it is distant from said structural duct; and
• the upper edge (31) of each lateral panel (14) is extended, in the raised position, beyond said structural duct (7) to cover the corresponding longitudinal edges of said dome (11) and said ceiling panel (12) .

2. The fuselage as claimed in claim 1,
**characterized in that** openings (13) are made **in that** part of each lateral panel (14) that faces said corresponding structural duct (7).

3. The fuselage as claimed in one of claims 1 or 2,
**characterized in that** each lateral panel (14) is connected, in its raised position, to its corresponding structural duct (7) by quick latch/unlatch fixing means (34).

4. The fuselage as claimed in anyone of claims 1 to 3,
**characterized in that** it comprises, along each lateral side of said fuselage, a support section piece (20) fixed longitudinally to said lateral side of the fuselage and along which said lateral panel (14) of the one-piece assembly is mounted such that it can pivot about said connection the axis of which is longitudinal.

5. The fuselage as claimed in claim 4,
**characterized in that** said connection the axis of which is longitudinal is defined by a hinge (15) one leaf (17) of which is fixed to the lower edge of said lateral panel (14) and the other leaf (18) of which is fixed to said section piece (20).

6. Fuselage as claimed in anyone of claims 1 to 5 of the type in which an outer trim panel (25) is attached to each cover assembly while at the same time being spaced therefrom,
**characterized in that** each outer panel (25) covers, at the bottom, said connection (15) the axis of which is longitudinal and extends, in the upper part, up to near said corresponding structural duct (7), and **in that** it is connected to said lateral panel (14) by quick latch/unlatch fixing means(26).

7. The fuselage as claimed in anyone claims 1 to 6,
**characterized in that** said dome (11) is attached from underneath, from said passenger cabin (5), against said parallel structural ducts (7) and is fixed thereto.

8. The fuselage as claimed in anyone of claims 1 to 7,
**characterized in that** said lower ceiling panel (12) is attached from underneath, from said cabin, against said dome (11) and is fixed thereto and to said structural ducts (7).

9. The fuselage as claimed in claims 1 and 4,
**characterized in that** said structural ducts (7) and said section pieces (20) are fixed to the walls (2) of said fuselage by damping elements (24).

## Patentansprüche

1. Luftfahrzeugrumpf, umfassend Wände, die die Passagierkabine (5) begrenzen und die im oberen Teil des Rumpfes an der einen bzw. der anderen Seite seiner Längssymmetrieebene zwei längs verlaufende und parallel voneinander beabstandete Strukturkanäle (7) aufweisen, in denen die Betriebseinrichtungen des Luftfahrzeugs verlaufen, sowie einen Innenaufbau;
**dadurch gekennzeichnet, dass** der Innenaufbau umfasst:
- ein langgestrecktes mittleres Element, das eine Kuppel (11) bildet und die beiden Strukturkanäle verbindet;
- eine untere Deckenplatte (12), die unter der Kuppel angeordnet ist und zur Kabine hin gerichtet ist; und
- zwei Seitenplatten (14) zur Abdeckung, die derart angeordnet sind, dass:
• der untere Rand (19) jeder Seitenplatte (14) in Bezug auf den Rumpf um eine Verbindung (15) mit Längsachse herum gelenkig angeordnet ist, wodurch jede Platte einnehmen kann: eine obere Position, in der sie in der Nähe ihres oberen Randes (31) mit dem Strukturkanal (7) verbunden ist, und eine untere Position, in der sie von dem Strukturkanal beabstandet ist; und
• der obere Rand (31) jeder Seitenplatte (14) in der oberen Position über den Strukturkanal (7) hinausgehend verlängert ist, um die entsprechenden Längsränder der Kuppel (11) und der Deckenplatte (12) zu bedecken.

2. Luftfahrzeugrumpf nach Anspruch 1,
**dadurch gekennzeichnet, dass** Öffnungen, (13) in dem Teil jeder Seitenplatte (14) gebildet sind, der sich gegenüber von dem entsprechenden Strukturkanal (7) befindet.

3. Luftfahrzeugrumpf nach Anspruch 1 oder 2,
**dadurch gekennzeichnet, dass** jede Seitenplatte (14) in ihrer oberen Position durch Befestigungsmittel zum schnellen Verriegeln/Entriegeln (34) mit ihrem entsprechenden Strukturkanal (7) verbunden ist.

4. Luftfahrzeugrumpf nach einem der Ansprüche 1 bis 3,
**dadurch gekennzeichnet, dass** er entlang von jedem seitlichen Teil des Rumpfes ein Halteprofil (20) umfasst, das in Längsrichtung am seitlichen Teil des Rumpfes befestigt ist und an dem die Seitenplatte (14) der Einzelblockeinheit derart montiert ist, dass sie um die Verbindung mit Längsachse schwenkbar ist.

5. Luftfahrzeugrumpf nach Anspruch 4,
**dadurch gekennzeichnet, dass** die Verbindung mit Längsachse durch ein Scharnier (15) definiert ist, dessen eines Band (17) am unteren Rand der Seitenplatte (14) befestigt ist und dessen anderes Band (18) am Profil (20) befestigt ist.

6. Luftfahrzeugrumpf nach einem der Ansprüche 1 bis 5, von dem Typ, bei dem an jede Abdeckungseinheit eine Außenplatte zur Verkleidung (25) angesetzt ist, wobei sie von dieser beabstandet ist,
**dadurch gekennzeichnet, dass** jede Außenplatte (25) im unteren Teil die Verbindung (15) mit Längsachse bedeckt und sich im oberen Teil bis zur Nähe des entsprechenden Strukturkanals (7) erstreckt, und dass sie durch Befestigungsmittel zum schnellen Verriegeln/Entriegeln (26) mit der Seitenplatte (14) verbunden ist.

7. Luftfahrzeugrumpf nach einem der Ansprüche 1 bis 6,
**dadurch gekennzeichnet, dass** die Kuppel (11) von unten her und von der Passagierkabine (5) ausgehend an die Strukturkanäle (7) angesetzt ist und an diesen befestigt ist.

8. Luftfahrzeugrumpf nach einem der Ansprüche 1 bis 7,
**dadurch gekennzeichnet, dass** die untere Deckenplatte (12) von unten her und von der Passagierkabine ausgehend an der Kuppel (11) angesetzt ist und an dieser sowie an den Strukturkanälen (7) befestigt ist.

9. Luftfahrzeugrumpf nach den Ansprüche 1 und 4,
**dadurch gekennzeichnet, dass** die Strukturkanäle (7) und die Profile (20) unter Zwischenstellung von Dämpfungselementen (24) an den Wänden (2) des Flugzeugrumpfes befestigt sind.
